# EUROPEAN PATENT SPECIFICATION

(11) **EP 0 971 283 B1**
(45) Date of publication and mention of the grant of the patent: **17.03.2004**
(21) Application number: 98112881.2
(22) Date of filing: 10.07.1998
(51) Int. Cl.: G06F 1/16

(54) **A notebook computer**
Rechner des Note-book Typs
Ordinateur du type notebook

(43) Date of publication of application: 12.01.2000
(73) Proprietor: Lin, Hui, Taipei (TW)
(72) Inventor: Lin, Hui, Taipei (TW)
(74) Representative: Hoarton, Lloyd Douglas Charles

(56) References cited:
- US-A- 5 333 116
- PATENT ABSTRACTS OF JAPAN vol. 018, no. 484 (P-1798), 8 September 1994 & JP 06 161703 A (PFU LTD), 10 June 1994
- PATENT ABSTRACTS OF JAPAN vol. 013, no. 377 (P-922), 22 August 1989 & JP 01 131913 A (MITSUBISHI ELECTRIC CORP), 24 May 1989
- PATENT ABSTRACTS OF JAPAN vol. 098, no. 010, 31 August 1998 & JP 10 143086 A (HITACHI TELECOM TECHNOL LTD), 29 May 1998
- PATENT ABSTRACTS OF JAPAN vol. 095, no. 004, 31 May 1995 & JP 07 028556 A (CANON INC), 31 January 1995

## Description

### BACKGROUND OF THE INVENTION

THE INVENTION relates to a notebook computer with folded dual display, in particular, to that having two displays, which can be folded to each other at any tilt angles such that the images thereon can be viewed simultaneously by plural persons at different positions.

The development of information technology makes the prosperous progressive in the computer industry. Personal computers (PCs) are the most popular computer product and have broad application at home and office. Compared to the large-size computers used decades ago, recent PCs have comparable performance with much smaller size. However, from the viewpoint of portability, recent PCs still have too much weight to be taken easily. On the other hand, desktop computers are powered through sockets and this is the major disadvantage to carry them freely. Therefore, there is a need of notebook computers. The portability requirements for notebook computers are less weight and compact size. However, owing to the limitation of its size, notebook computers use liquid-crystal displays as the display instead of the CRTs used in the desktop ones. Though liquid-crystal display shows images in soft quality, the images become unclear if the viewer views the images from an improper angle, in particular, in the situation where plural viewers have to see the image at the same time. In addition, for one-to-one computer instruction or discussion between colleagues and classmates, it always happens that two persons are crowded in front of one display to see the image thereon, accordingly an uncomfortable feeling inevitably occurs.

Patent Publication No. JP 06161703 discloses a notebook-type computer having a pair of screen displays, the two displays being pivotally mounted to one another. The two screen displays may be orientated such that both may be view simultaneously by a person operating the keyboard of the notebook computer or, alternatively, the displays can be arranged so that one display can be viewed by a person operating the computer whilst the other display can be viewed independently by a person facing the operator of the computer. In moving the second display screen from the first orientation to the second orientation, the screen becomes inverted and so the computer is provided with an arrangement to invert the information displayed on the second screen as it is moved between these two alternate configurations

Patent Publication No. JP 01131913 discloses a notebook type computer having a pair of display screens which can be arranged so that one display screen can be viewed by a person operating the keyboard of the computer whilst the other display screen can be viewed by a person facing the person operating the computer. In this arrangement, the angles of two screens relative to one another appear not be adjustable.

The invention is thus provided to improve the above disadvantages of the conventional notebook computers.

### SUMMARY OF THE INVENTION

An object of the invention is to provide a notebook computer with folded dual-display wherein the computer is provided with two displays arranged at opposite direction when the two displays are opened such that plural persons can see the same image at the same time. Further, the two displays can be folded into the computer body to reduce the size of the whole body such that the portability of the notebook computer will not be affected.

A further object of the invention is to provide a notebook computer with folded dual-display wherein the two displays can be engaged to each other as being folded to reach an engaged and fastened state.

A still further object of the invention is to provide a notebook computer with folded dual-display wherein the two displays can be adjusted with respect to their tilt angles such that more comfortable viewing feelings to the viewers can be obtained.

According to the present invention, there is provided a notebook computer having a pair of displays, wherein a first of said displays is pivotally mounted to the computer, and said first display is pivotally mounted to a second of said displays such that plural persons can see the image on the displays at the same time, the arrangement being characterised in that the tilt angles of the two displays can be adjusted to a plurality'of fixed states, wherein a margin of the said second display is provided with a stopper to engage a rack to achieve said plurality of fixed states.

The other objects and effects of the invention will be described in more detail, with reference to the following drawings:

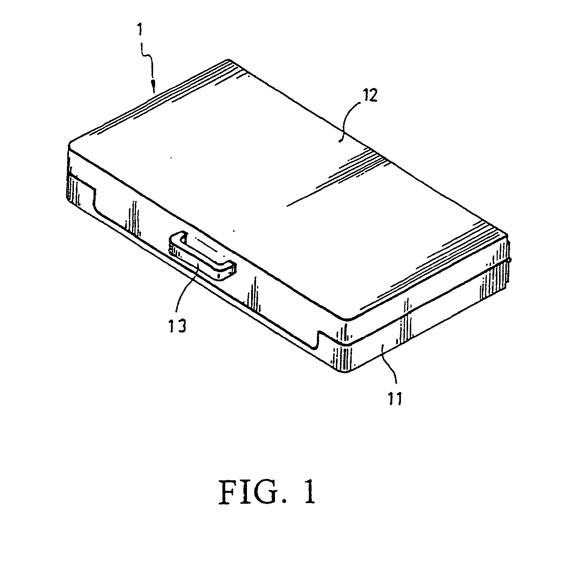

FIGURE 1 is a perspective view of the closed state of the whole notebook computer of the invention;
FIGURE 2 is a perspective view of the opened state of the notebook computer of the invention;

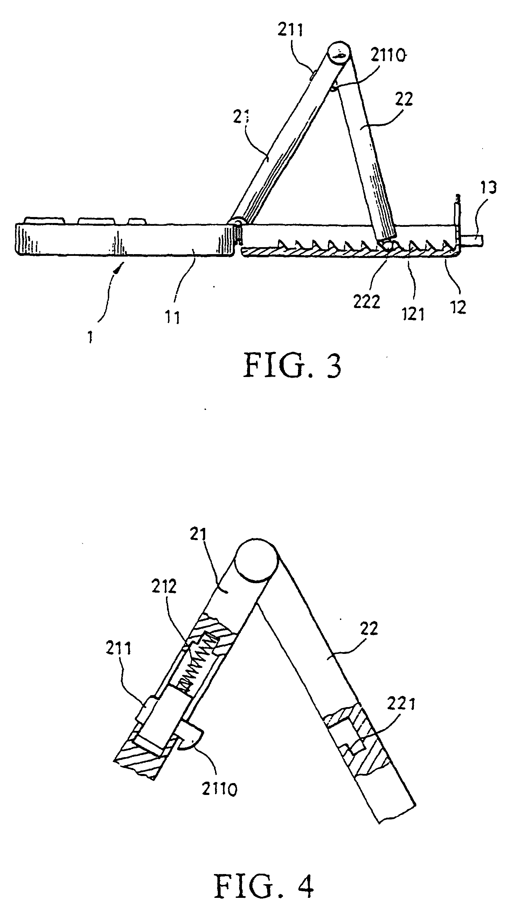

Figure 3 is a planar view of the structure for adjusting the tilt angles of the displays; and
Figure 4 is a cross section view of the structure for engaging the first and second displays.

### Detailed Description of Preferred Embodiment

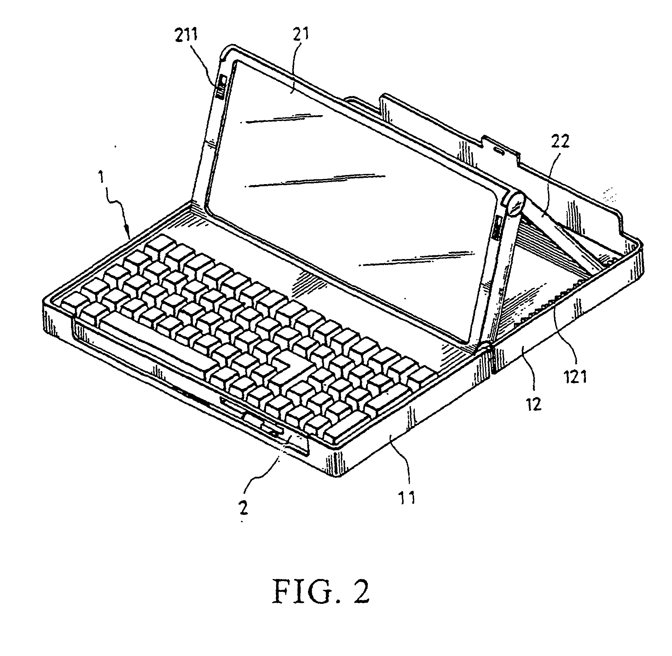

As shown in Figure 2, the notebook computer with folded dual-display according to the invention comprises a case body 1 and a notebook computer wherein the case body 1 consists of a case base 11 and a case cover 12 which are pivoted together. Inside the case cover 12, there are provided with racks 121 at the opposite sides of the case cover, respectively, and the teeth portion of the rack 121 is in the shape of reverse hook. Outside the case cover 12, there is provided with a handle 13. An engaging means is provided between the case cover 12 and the case base 11 thereby the case base 11 and the case cover 12 is fastened together through the engaging means when the case cover 12 covers the case base 11. In the notebook computer, the computer body 2 is permanently placed in the case base 11 in the manner that the keyboard of the computer body 2 faces upwardly. The computer body 2 is pivoted with a first display 21 and the first display 21 is pivoted with a second display 22 wherein each side of the body of the first display 21 is provided with a slot having a latch piece 211 therein. The latch piece 211 has a projection part on one end and a hook 2110 on one side. The projection part is engaged with an elastic element 212 and then the latch piece 211 is placed into the slot to let the elastic element 212 acts on the latch piece 211 and the slot. The elastic strength produced by the elastic element 212 makes the hook 2110 of the latch piece 211 have a power of spontaneous engagement. An engaging slot 221 is provided to the body of the second display 22 at the position corresponding to the hook 2110 thereby the hook 2110 engages spontaneously to the margin of the engaging slot 221 to reach a fastened state when the first display 21 and the second display 22 are folded. Accordingly, the first display 21 and the second display 22 together cover the computer body 2. Thereafter, close the case cover 12 onto the case base 11 and engage it thereto so as to make the computer portable. Upon pushing the latch piece 211, the hook 2110 is released from the engaged state with the engaging slot and therefore the first display 21 and the second display 22 are opened. Further, a margin of the second display 22 is provided with a rod-shaped stopper 222 thereby, after the second display 22 is opened, the stopper 222 can be placed against any tooth of the rack 121 to reach a fixed state. Also, the tilt angles of the first display 21 and the second display 22 can be adjusted by changing the position of the stopper 222 against other teeth such that plural persons at opposite positions can see the image on the displays at the same time. To sum up, the invention is useful and fulfills the statutory requirements for a utility invention.

The above description is used to illustrate the embodiments of the invention but is not in any way limited thereto.

The features disclosed in the foregoing description in the following claims and/or in the accompanying drawings may, both separately and in combination thereof, be material for realising the invention in diverse forms thereof.

## Claims

1. A notebook computer (2) having a pair of displays (21 and 22), wherein a first (21) of said displays is pivotally mounted to the computer (2), and said first display (21) is pivotally mounted to a second (22) of said displays such that plural persons can see the image on the displays at the same time, the arrangements being **characterised in that** the tilt angles of the two displays can be adjusted to a plurality of fixed states, wherein a margin of the said second display (22) is provided with a stopper (222) to engage a rack (121) to achieve said plurality of fixed states.

2. A notebook computer according to Claim 1, wherein said rack (121) has teeth in the shape of reverse hooks.

3. A notebook computer according to any preceding claim, wherein the first display (21) is provided with a slot, said slot being provided with a latch piece (211) having a hook (2110), and wherein the second display (22) is provided with an engaging slot (221) at a corresponding position to the slot provided on the first display (21) for engagement by the hook.

4. A notebook computer according to Claim 3 wherein an elastic element (212) is provided between the latch piece (211) and the slot of the first display (21) such that the hook (2110) can engage the engaging slot (221) on the second display (22) spontaneously as the first and second displays are folded together.

5. A notebook computer according to any preceding claim, wherein the notebook computer is provided with a case body (1), said case body comprising a case base (11) and case cover (12) pivoted together; wherein the case base houses the notebook computer and the displays, and wherein said cover closes onto said case base.

6. A notebook computer according to Claim 5, wherein the inside of the case cover (12) is provided with said rack (121).

7. A notebook computer according to Claim 5 or 6, wherein a handle (13) is provided on the case body.

## Patentansprüche

1. Notebook-Computer (2) mit zwei Anzeigeeinheiten (21 und 22), wobei eine erste (21) der Anzeigeeinheiten schwenkbar an dem Computer (2) angebracht ist, und wobei die erste Anzeigeeinheit (21) schwenkbar an eine zweite (22) der Anzeigeeinheiten angebracht ist, so dass mehrere Personen eine Darstellung auf den Anzeigeeinheiten zur gleichen Zeit sehen können, wobei die Anordnungen **dadurch gekennzeichnet sind, dass** die Neigungswinkel der beiden Anzeigeeinheiten auf eine Vielzahl von festen Positionen einstellbar sind, wobei ein Rand der zweiten Anzeigeeinheit (22) mit einer Haltevorrichtung (222) versehen ist, um in eine Halterung (121) einzugreifen, um die Vielzahl von festen Positionen zu erreichen.

2. Notebook-Computer nach Anspruch 1, wobei die Halterung (121) Zähne in Form von umgekehrten Haken aufweist.

3. Notebook-Computer nach einem der vorangehenden Ansprüche, wobei die erste Anzeigeeinheit (21) mit einem Schlitz versehen ist, wobei der Schlitz mit einem Einrastelement (211), das einen Haken (2110) aufweist, versehen ist, und wobei die zweite Anzeigeeinheit (22) mit einem Aufnahmeschlitz (221) an einer zu dem Schlitz der ersten Anzeigeeinheit (21) korrespondierenden Position versehen ist, um einen Eingriff des Hakens zu ermöglichen.

4. Notebook-Computer nach Anspruch 3, wobei ein elastisches Element (212) zwischen dem Einrastelement (211) und dem Schlitz der ersten Anzeigeeinheit (21) vorgesehen ist, so dass der Haken (2110) in den Aufnahmeschlitz (221) der zweiten Anzeigeeinheit von selbst eingreifen kann, wenn die erste und die zweite Anzeigeeinheit zusammengefaltet werden.

5. Notebook-Computer nach einem der vorangehenden Ansprüche, wobei der Notebook-Computer mit einem Gehäuse (1) versehen ist, das eine Gehäusebasis (11) und einen Gehäuseabdeckung (12) umfasst, die schwenkbar miteinander verbunden sind, wobei die Gehäusebasis den Notebook-Computer und die Anzeigeeinheiten aufnimmt, und wobei die Gehäuseabdeckung die Gehäusebasis verschließt.

6. Notebook-Computer nach Anspruch 5, wobei das Innere der Gehäuseabdeckung (12) mit der Halterung (121) versehen ist.

7. Notebook-Computer nach Anspruch 5 oder 6, wobei ein Handgriff (13) an dem Gehäuse angebracht ist.

## Revendications

1. Ordinateur bloc-notes (2) ayant une paire d'afficheurs (21 et 22), dans lequel un premier (21) desdits afficheurs est monté à pivotement sur l'ordinateur (2), et ledit premier afficheur (21) est monté à pivotement sur un deuxième (22) desdits afficheurs de sorte que plusieurs personnes peuvent voir l'image sur les afficheurs en même temps, les agencements étant **caractérisés en ce que** les angles d'inclinaison des deux afficheurs peuvent être réglés à une pluralité d'états fixes, un bord du deuxième afficheur (22) étant muni d'un arrêt (222) pour s'engager dans une crémaillère (121) afin d'obtenir ladite pluralité des états fixes.

2. Ordinateur bloc-notes conforme à la Revendication 1, dans lequel ladite crémaillère (121) a des dents en forme de crochets renversés.

3. Ordinateur bloc-notes conforme à une revendication précédente, dans lequel le premier afficheur (21) est muni d'une fente, ladite fente étant équipée d'une pièce de verrouillage (211) ayant un crochet (2110), et dans lequel le deuxième afficheur (22) est muni d'une fente de contact (221) à une position correspondante à la fente prévue sur le premier afficheur (21) pour s'engager avec le crochet.

4. Ordinateur bloc-notes conforme à la Revendication 3, dans lequel un élément élastique (212) est prévu entre la pièce de verrouillage (211) et la fente du premier afficheur (21) afin que le crochet (2110) puisse s'engager dans la fente de contact (221) sur le deuxième afficheur (22) spontanément lorsque les premier et deuxième afficheurs sont pliés ensemble.

5. Ordinateur bloc-notes conforme à une quelconque revendication précédente, dans lequel l'ordinateur bloc-notes est muni d'un corps de boîtier (1), ledit corps de boîtier comprenant une embase de boîtier (11) et un couvercle de boîtier (12) pivotant ensemble ; l'embase de boîtier contenant l'ordinateur bloc-notes et les afficheurs, et ledit couvercle se fermant sur l'embase de boîtier.

6. Ordinateur bloc-notes conforme à la Revendication 5, dans lequel l'intérieur du couvercle de boîtier (12) est muni de ladite crémaillère (121).

7. Ordinateur bloc-notes conforme à la Revendication 5 ou 6, dans lequel une poignée (13) est prévue sur le corps de boîtier.
